# EUROPÄISCHE PATENTANMELDUNG

(11) **EP 2 008 922 A1**
(43) Veröffentlichungstag der Anmeldung: **31.12.2008**
(21) Anmeldenummer: 07111375.7
(22) Anmeldetag: 29.06.2007
(51) Int. Cl.: B62J 11/00, A42B 3/04

(54) **Halterung für Fahrräder**

(71) Anmelder: Van Spijk, Piet, 6004 Luzern (CH)
(72) Erfinder: van Spijk, Piet, CH-6004 Luzern (CH); Lüthi, Ernst, CH-4805 Brittnau (CH); Berchtold, Tobias, CH-6000 Luzern (CH)
(74) Vertreter: Rutz, Peter

(57) **Zusammenfassung**

Die Halterung (1), die für die Montage an einem Fahrrad vorgesehen ist, weist ein Basisteil (11) auf, das anhand von Montageelementen (115, 91, 92) mit einem Strukturelement (90) des Fahrrads, insbesondere einem Teil des Fahrradrahmens, verbindbar ist, und das mit Befestigungselementen (4;1160; 111) zur Befestigung eines Helms (3) versehen ist. Erfindungsgemäss ist das vorzugsweise stab- oder plattenförmige Basisteil (11) mit wenigstens einem Aufnahmeelement (12A, 12B; 112; 1120) versehen, das der Lagerung wenigstens eines weiteren Nutzgegenstandes (2), insbesondere einer Flasche, dient, so dass der Helm (3) und der weitere Nutzgegenstand (2) gleichzeitig oder alternativ mit der Halterung (1) verbunden sein können.

## Beschreibung

Die Erfindung betrifft eine Halterung für Fahrräder, die dem Halten wenigstens eines Helms dient, nach dem Oberbegriff des Patentanspruchs 1.

Eine Helmhalterung für Zweiräder ist beispielsweise aus [1], US 3 529 451 bekannt. Diese Helmhalterung weist ein der Aufnahme eines Schlosses dienendes Gehäuse sowie eine Klemmvorrichtung auf, die mit einem Strukturelement des Zweirads verbindbar ist. In das Schloss ist ein dem Halten des Helms dienender Bolzen einführbar, der durch das Betätigen des Schlosses mittels eines Schlüssels arretiert oder gelöst werden kann. Nach der Befestigung des Helms hängt dieser an der Helmhalterung, die beispielsweise an der Lenkstange des Zweirads befestigt ist. Der Helm, der an einem Band gehalten ist, hängt somit lose unterhalb der Lenkstange und tritt störend in Erscheinung, wenn das Zweirad verschoben oder parkiert werden soll. Beispielsweise kann der Helm an benachbarten, ebenfalls parkierten Zweirädern anschlagen. Die Benutzung des Fahrrads, beispielsweise um eine kurze Strecke zurückzulegen, währenddem der Helm mit der Halterung verbunden ist, ist praktisch nicht möglich, da der baumelnde Helm den Fahrer stören und eine Gefahrenquelle bilden würde. Zudem tritt die Helmhalterung als zusätzliches Vorrichtungsteil ästhetisch störend in Erscheinung.

Eine weitere Helmhalterung ist aus [2], DE 10 2004 061 359 A1 bekannt. In [2] ist eine abschliessbare Ablage für einen Fahrrad-Schutzhelm beschrieben, die wahlweise am Lenker oder an der Sattelstütze befestigt werden kann. Die in [2] beschriebene Vorrichtung, die im Wesentlichen eine Helm-Auflage und eine Aufdruckhaube aufweist, ist aufwendig ausgestaltet und tritt ebenfalls störend in Erscheinung. Aus der Sicht der Anwender ist die Befestigung derartiger Vorrichtungsteile im Bereich der Lenkstange oder des Sattels sowohl aus funktionellen, als auch aus ästhetischen Gründen nicht wünschenswert.

Aus [3], US 6 415 635 B1 ist eine weitere Vorrichtung für die Befestigung eines Helms an einem Fahrrad bekannt. Mit dieser Vorrichtung können jedoch nur entsprechend angepasste Helme befestigt werden, deren Helmschalen eine Montageöffnung aufweisen, durch die eine Verschlussstange hindurch führbar ist. Ebenso wie bei den Vorrichtungen von [1] und [2], ist ein weiterer Zusatznutzen zudem auch bei dieser Vorrichtung nicht gegeben.

Der vorliegenden Erfindung liegt daher die Aufgabe zugrunde, eine verbesserte Halterung für ein Fahrrad anzugeben, mittels der ein Helm befestigt werden kann.

Diese Aufgabe wird mit der in Anspruch 1 angegebenen Halterung gelöst. Vorteilhafte Ausgestaltungen der Erfindung sind in weiteren Ansprüchen angegeben.

Insbesondere ist eine Halterung anzugeben, die dem Anwender einen zusätzlichen Nutzen bietet und nicht störend in Erscheinung tritt.

Die Halterung soll zudem einfach aufgebaut sowie rasch und einfach handhabbar sein.

Die vorzugsweise aus Kunststoff oder Metall gefertigte Halterung, die für die Montage an einem Fahrrad vorgesehen ist, weist ein Basisteil auf, das anhand von Montageelementen mit einem Strukturelement des Fahrrads, insbesondere einem Teil des Fahrradrahmens, verbindbar ist, und das mit Befestigungselementen zur Befestigung eines Helms versehen ist.

Erfindungsgemäss ist das vorzugsweise stab- oder plattenförmige Basisteil zudem mit wenigstens einem Aufnahmeelement versehen, das der Lagerung wenigstens eines weiteren Nutzgegenstandes, insbesondere einer Flasche, dient, so dass der Helm und der weitere Nutzgegenstand gleichzeitig oder alternativ mit der Halterung verbunden sein können.

Die erfindungsgemässe Halterung kann daher in verschiedener Weise genutzt werden. Der Radfahrer kann wahlweise den Helm oder den weiteren Nutzgegenstand an der Halterung befestigen. Sofern die Abmessungen der Halterung und des Nutzgegenstandes entsprechend gewählt sind, können der Helm und der Nutzgegenstand gleichzeitig mit der Halterung verbunden sein.

Beispielsweise kann der Radfahrer eine Getränkeflasche in die Halterung einsetzen, während er das Fahrrad benutzt und dabei den Helm trägt. Nach Beendigung der Fahrt, kann der Radfahrer die Flasche aus der Halterung entnehmen und den Helm an der Halterung befestigen. Die entnommene Flasche wird vom Fahrer normalerweise in dessen Wohnung für den nächsten Einsatz bereitgehalten. In den Perioden, in denen das Fahrrad nicht benutzt wird, wird die Flasche daher vorzugsweise entnommen und vor dem Zugriff Dritter geschützt. In diesen Perioden kann die Halterung daher vorteilhaft für die Befestigung des Helms genutzt werden, der vorzugsweise beim Fahrrad verbleibt, wenn dieses nicht genutzt wird. In vorzugsweisen Ausgestaltungen der Halterung wird der Helm mittels einer anhand eines Schlüssels betätigbaren Verschlussvorrichtung vor Diebstahl geschützt.

Für beide Nutzgegenstände, den Helm und z.B. die Getränkeflasche, wird erfindungsgemäss somit eine einzige Halterung zur Verfügung gestellt, weshalb die Montage von zwei verschiedenen Halterungen, die störend in Erscheinung treten, vermieden werden kann.

Besonders vorteilhaft ist ferner, dass handelsübliche Helme und Getränkeflaschen in die Halterung eingesetzt werden können, ohne dass die Flaschen einerseits oder die Halterung andererseits angepasst werden müssen. Um die Flexibilität zu erhöhen, wird gegebenenfalls das Aufnahmeelement verschiebbar gelagert.

Der Helm ist derart an der Halterung befestigbar, dass dessen Innenseite dem Basisteil zugewandt ist. Der Rand des Helms liegt front- und rückseitig nahe am Basisteil an. Das Basisteil und der Helm begrenzen dabei den Innenraum des Helms, der für die Befestigung des weiteren Nutzgegenstandes genutzt werden kann, sofern dessen Abmessungen entsprechend gewählt sind. Falls der weitere Nutzgegenstand durch den Innenraum des Helms aufgenommen werden kann, ist es daher möglich, sowohl den Helm, als auch den weiteren Nutzgegenstand an der Halterung zu befestigen. Vorteilhafterweise kann beispielsweise eine Getränkeflasche an den Innenraum des Helms angepasst und zusammen mit dem Helm an der Halterung befestigt werden.

Erfindungsgemäss werden, drehbare, verschiebbar gelagerte oder fixe Aufnahmeelemente einzeln oder in Kombination verwendet.

In einer vorzugsweisen Ausgestaltung sind ein erstes und ein zweites Aufnahmeelement vorgesehen, die je mittels wenigstens eines Gelenks mit dem Basisteil verbunden sind. Die beiden Aufnahmeelemente sind dabei derart zwischen einer Verschlussstellung und einer Öffnungsstellung drehbar, dass in der Verschlussstellung der wenigstens eine weitere Nutzgegenstand durch die beiden Aufnahmeelemente und in der Öffnungsstellung der Helm gehalten werden kann.

In der Verschlussstellung bilden das erste und das zweite Aufnahmeelement einen Behälter, in den der Nutzgegenstand einsetzbar und aus diesem wieder entnehmbar ist.

Alternativ können das erste und das zweite Aufnahmeelement in der Verschlussstellung einen vorzugsweise wasserdicht abgeschlossenen Container bilden, welcher der Aufnahme des wenigstens einen Nutzgegenstandes dient. Diese Ausgestaltung erlaubt dem Radfahrer beispielsweise, Proviant oder Kleidungsstücke in der Halterung zu deponieren, wo diese vor Schmutz und Nässe geschützt sind.

Das erste und das zweite Aufnahmeelement sind dabei vorzugsweise derart dimensioniert, dass der Rand des Helms in der Öffnungsstellung durch die Ränder der schalenförmigen Aufnahmeelemente zumindest teilweise umfasst wird. Dadurch kann der Helm bei geöffneten Aufnahmeelementen besonders einfach in die Halterung eingelegt und sicher gehalten werden. Mittels der Befestigungselemente ist daher nur noch eine einfache Fixierung vorzunehmen.

In einer weiteren vorzugsweisen Ausgestaltung sind das erste und das zweite Aufnahmeelement mittels eines Verschlusses, vorzugsweise mittels eines Schnapp-Verschlusses, in der Verschlussstellung arretierbar. Die beiden Aufnahmeelemente sind in der Verschlussstellung daher stabil miteinander verbunden und der Nutzgegenstand gut gesichert.

In einer weiteren vorzugsweisen Ausgestaltung ist wenigstens ein stationäres Aufnahmeelement zusätzlich oder alternativ zu den beiden drehbaren Aufnahmeelementen vorgesehen. Das stationäre Aufnahmeelement, das dem Halten des weiteren Nutzgegenstands dient, ist verschiebbar auf dem Basisteil gelagert oder einstückig mit diesem verbunden. Durch die verschiebbare Lagerung des Aufnahmeelements kann die Halterung wahlweise an einen zu tragenden Nutzgegenstand angepasst werden. Hinsichtlich der Produktionskosten ist es hingegen vorteilhaft, das stationäre Aufnahmeelement einstückig mit dem Basisteil zu verbinden. Beispielsweise wird ein Aufnahmeelement vorgesehen, das aus zwei zueinander korrespondierenden Klammerelementen besteht. Das stationäre Aufnahmeelement kann ferner eine abschliessbare Box sein.

In einer weiteren vorzugsweisen Ausgestaltung weist das Basisteil ein Kopfstück und ein Fussstück auf, die den Helm, nach dessen Befestigung, frontseitig und rückseitig überragen. Das Fussstück und das stationäre Aufnahmeelement begrenzen dabei einen Raum, welcher der Aufnahme der gegebenenfalls elastischen Befestigungselemente, beispielsweise einem Netz, wenigstens einem Riemen oder Gurt, Seil, insbesondere Metallseil, oder Metallkette dient. Nach dem Öffnen der beiden drehbaren Aufnahmeelemente können die Befestigungselemente, die mittels Kopplungselementen mit dem Basisteil verbunden sind, entnommen und über den eingelegten Helm gespannt und fixiert werden.

Zur Sicherung gegen Diebstahl ist das Kopfstück oder das Fussstück mit einer mittels eines Schlüssels abschliessbaren Verschlussvorrichtung versehen, welche der Aufnahme eines Verbindungselements dient, das mit den Befestigungselementen, beispielsweise mit dem genannten Netz, verbunden ist.

Zur besonders einfachen Befestigung des Helms werden die Befestigungselemente in das Kopfstück und das Fussstück des Basisteils integriert. Beispielsweise wird der Helm mit dem Vorderrand unter das Kopfstück eingespannt und mittels eines am Fussstück vorgesehenen Befestigungselements fixiert.

Zur Sicherung gegen Diebstahl weisen das Kopfstück oder das Fussstück eine vorzugsweise mittels eines Schlüssels betätigbare Verschlussvorrichtung mit einem Befestigungselement auf, das formschlüssig mit dem befestigten Helm zusammenwirkt, gegebenenfalls in eine Öffnung, z.B. einen Lüftungsschlitz des Helms eingreift.

Die Halterung kann in verschiedener Weise mit dem Fahrrad verbunden werden. Am Basisteil kann wenigstens eine Montageöffnung vorgesehen werden, durch die eine Montageschraube hindurch geführt und mit dem Rahmen des Fahrrads verschraubt wird. Das Basisteil kann ferner einstückig mit Flanschen oder Klammern versehen sein, die mit dem für die Montage vorgesehenen Strukturelement des Fahrrads zusammenwirken.

Nachfolgend wird die Erfindung anhand von Zeichnungen näher erläutert. Dabei zeigt:
- Fig. 1: eine erfindungsgemässe Halterung 1 mit zwei mittels Gelenken 121A, 122A, ... an einem Basisteil 11 drehbar gelagerten Aufnahmeelementen 12A, 12B, die in der Verschlussstellung gezeigt sind, in der sie eine eingesetzte Getränkeflasche 2 umschliessen;
- Fig. 2: die Halterung 1 von Figur 1 mit den Aufnahmeelementen 12A, 12B in Öffnungsstellung, in der der Helm 3 aufgesetzt werden kann;
- Fig. 3: die Halterung 1 von Figur 1 von einer Seite;
- Fig. 4: die Halterung 1 von Figur 2 von einer Seite;
- Fig. 5: die Halterung 1 von Figur 2 von oben;
- Fig. 6: die Halterung 1 von Figur 2 mit dem aufgesetzten Helm 3;
- Fig. 7: die Halterung 1 von Figur 2 mit dem aufgesetzten und mittels Befestigungselementen 4, 41, 42 befestigten Helm 3;
- Fig. 8: die Halterung 1 von Figur 7 mit dem befestigten Helm 3 von einer Seite;
- Fig. 9: die Halterung 1 von Figur 7 mit dem befestigten Helm 3 von oben;
- Fig. 10: eine erfindungsgemässe Halterung 1 in einer vorzugsweisen Ausgestaltung mit zwei mittels Gelenken 121A, 121B an einem Basisteil 11 drehbar gelagerten Aufnahmeelementen 12A, 12B, die in der Verschlussstellung gezeigt sind, in der sie zusammen mit dem Basisteil 11 einen dicht abgeschlossene Container bilden;
- Fig. 11: die Halterung 1 von Figur 10 mit den drehbaren Aufnahmeelementen 12A, 12B in Öffnungsstellung, in der der Helm 3 aufgesetzt werden kann;
- Fig. 12: die Halterung 1 von Figur 11 mit einem, vorzugsweise abschliessbaren stationären Aufnahmeelement 1120, in dem beispielsweise Wertsachen deponiert werden können;
- Fig. 13: die Halterung 1 von Figur 11 mit dem aufgesetzten und befestigten Helm 3;
- Fig. 14: eine erfindungsgemässe Halterung 1 in einer weiteren vorzugsweisen Ausgestaltung mit zwei einstückig mit dem Basisteil 11 verbundenen stationären Aufnahmeelementen 112, die eine Getränkeflasche 2 halten und mit einem am Basisteil 11 vorgesehenen Kopfstück 111 und einem Fussstück 1160; und
- Fig. 15: die Halterung 1 von Figur 14 mit einem Helm 3, der gegebenenfalls über die Getränkeflasche 2 auf die Halterung 1 aufgesetzt ist und vom Kopfstück 111 und von einer am Fussstück 1160 vorgesehenen Verschlussvorrichtung 180 lösbar gehalten ist.

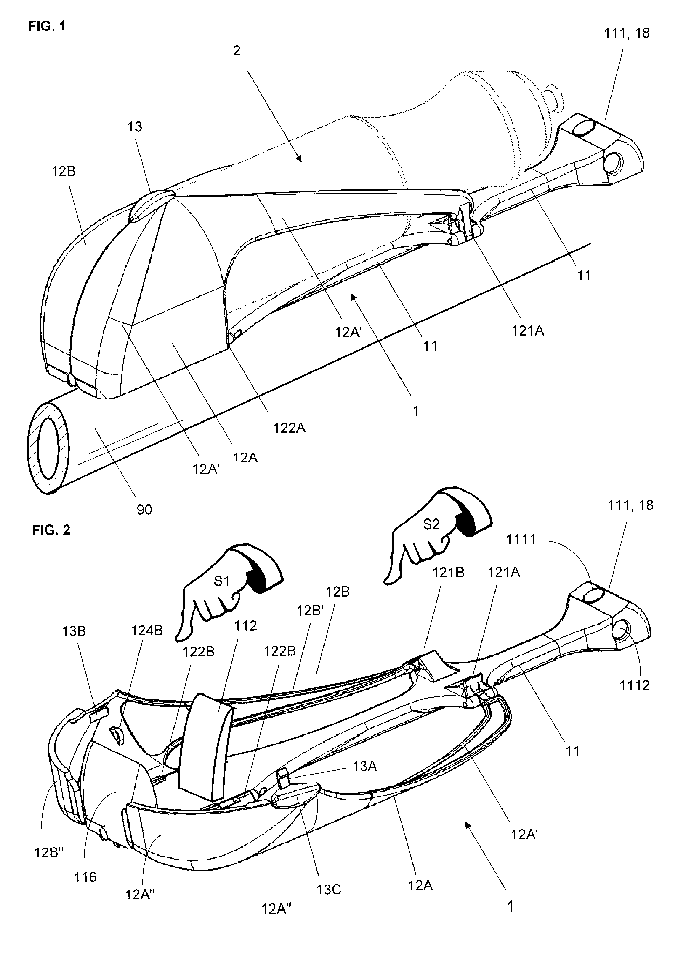

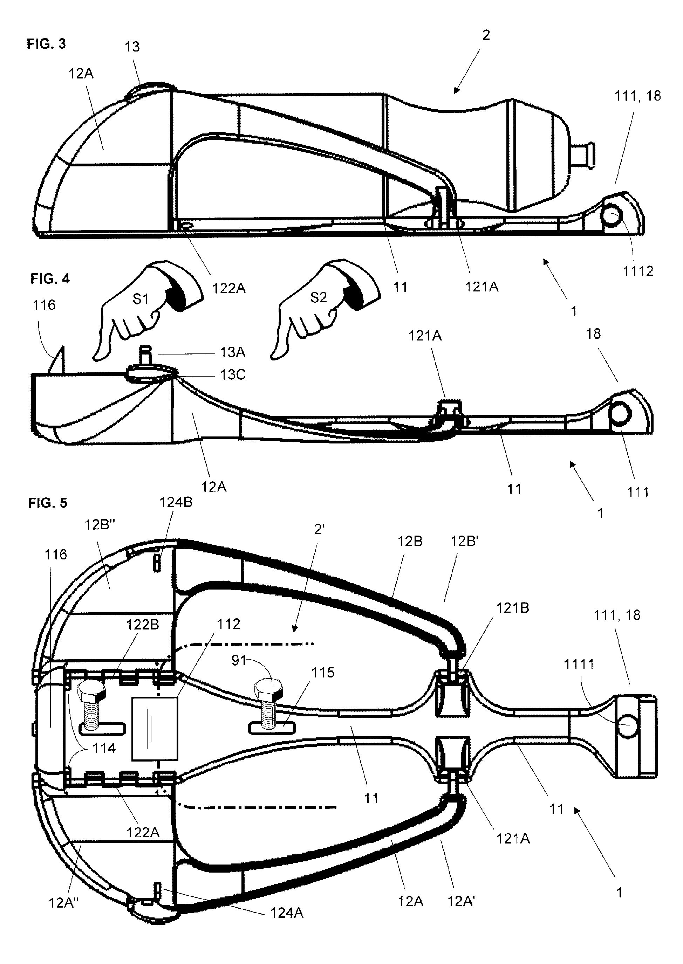

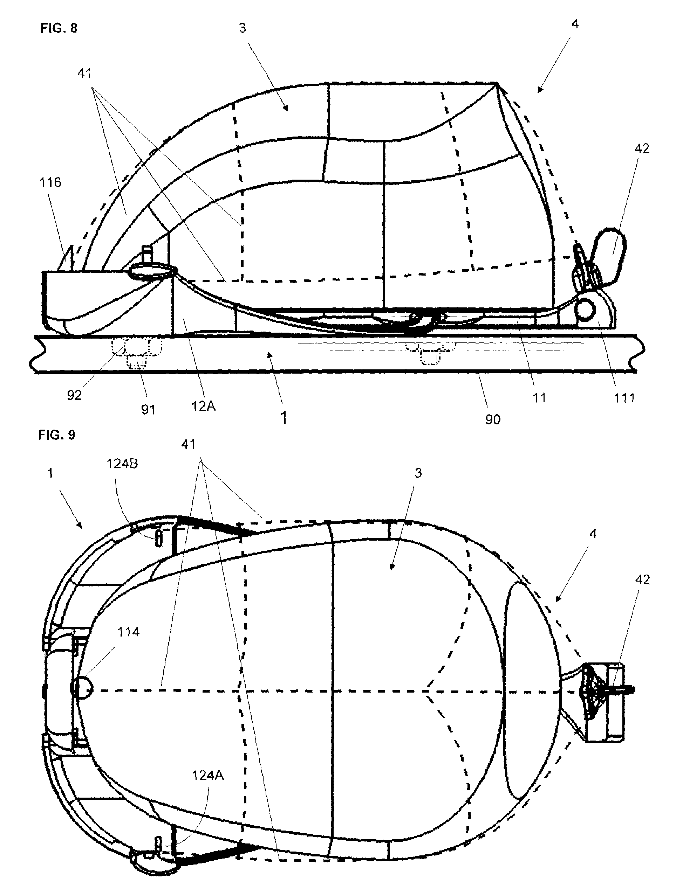

Figur 1 zeigt eine erfindungsgemässe Halterung 1, die ein längliches Basisteil 11 aufweist, das an einem Strukturelement 90 eines Fahrrads, beispielsweise einem Element des Rahmens montiert ist. An den Rahmen handelsüblicher Fahrräder sind oft Gewindebohrungen für Flaschenhalterungen vorgesehen, die für die Montage des Basisteils 11 verwendet werden können (siehe z.B. die Figuren 5 und 8). Alternativ kann das Basisteil mit Klemmelementen versehen sein, die mit einem Rahmenteil verbindbar sind. Ferner kann das Basisteil 11 auch an einen Adapter angepasst sein, der mit einem Rahmenteil verbunden wird. In diesem Fall kann die Halterung 1 wahlweise vom Adapter gelöst werden. Adapter dieser Art werden beispielsweise von der RIXEN & KAUL GmbH, D-42699 Solingen hergestellt (siehe http://www.klickfix.com/images/Katalog07.pdf, Katalog "Adapter & Zubehör" 2007).

Das Basisteil 11 weist auf beiden Seiten je zwei Gelenke 121A, 122A bzw. 121B, 122B (siehe Figur 5) auf, an denen je ein Aufnahmeelement 12A bzw. 12B drehbar gelagert ist. Die beiden Aufnahmeelemente 12A, 12B sind gegeneinander soweit drehbar, dass sie einerseits in die in Figur 1 gezeigte Verschlussstellung und andererseits in die in Figur 2 gezeigte Öffnungsstellung drehbar sind.

In der in Figur 1 gezeigten Verschlussstellung bilden die beiden zueinander komplementären Aufnahmeelemente 12A, 12B zusammen mit dem Basisteil 11 einen nach oben geöffneten Behälter, in den die Getränkeflasche 2 eingesetzt ist.

Die Aufnahmeelemente 12A, 12B können prinzipiell die Form von zueinander komplementären Segmenten eines einseitig abgeschlossenen Zylinders aufweisen. In der Verschlussstellung bilden die derart ausgestalteten Aufnahmeelemente 12A, 12B somit einen einseitig geschlossenen Zylinder, der als Behälter dient. Wie in Figur 1 gezeigt können die Aufnahmeelemente 12A, 12B ausgehend von diesem Prinzip beliebig an die jeweiligen Bedürfnisse des Anwenders oder Produzenten und insbesondere auch an die Formen der zu haltenden Nutzgegenstände angepasst werden.

Die schalenförmigen Aufnahmeelemente 12A, 12B von Figur 1 weisen grössere Ausnehmungen auf, so dass an der Oberseite nur ein relativ dünner Arm 12A' verblieben ist, der vom Gelenk 121A bzw. 121B bis zu einem Verschluss 13 reicht, durch den die beiden Aufnahmeelemente 12A, 12B in der Verschlussstellung von Figur 1 arretierbar sind. Auf der Unterseite sind die Aufnahmeelemente 12A, 12B nach innen verjüngt, so dass keine Kante verblieben ist, die den Radfahrer behindern oder stören könnte. Durch die Unterseiten 12A" der drehbaren Aufnahmeelemente 12A, 12B wird daher der Boden des Behälters gebildet.

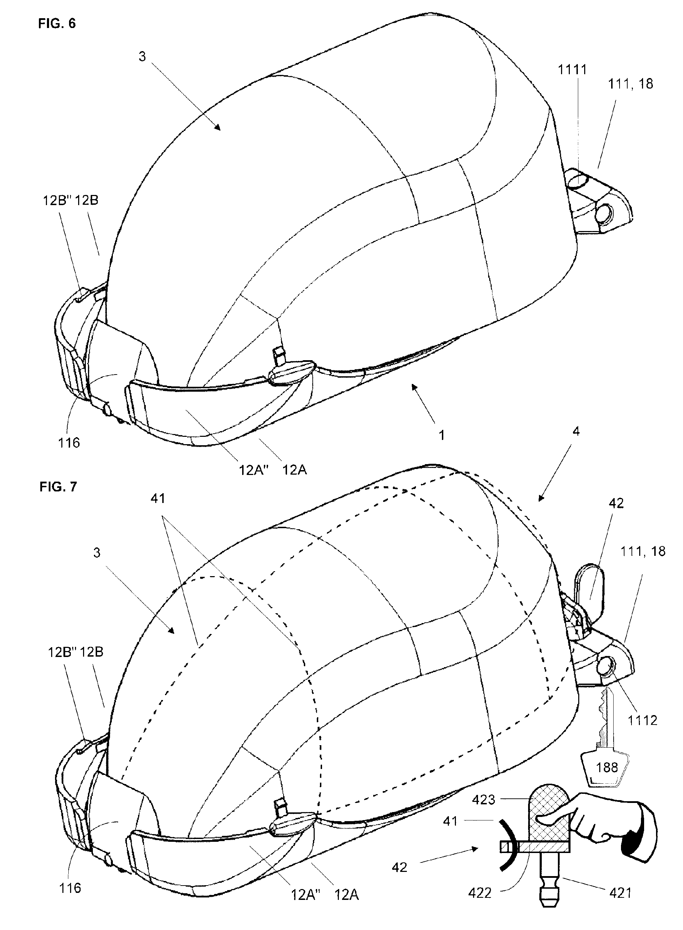

Der Kopf 111 des Basisteils 11, der in einer vorzugsweisen Ausgestaltung eine mittels eines Schlüssels 188 betätigbare Verschlussvorrichtung 18 aufweist (siehe Figur 7) wird für die nachstehend beschriebene Befestigung des Helms 3, nicht jedoch für die Befestigung der Flasche 2 verwendet.

Nach dem Lösen des Verschlusses 13 können die Aufnahmeelemente 12A, 12B je um etwa 90° auseinander gedreht werden, wie dies in Figur 2 gezeigt ist.

Die Arme 12A', 12B' der Aufnahmeelemente 12A, 12B liegen nun praktisch in einer Ebene, während die Unterseiten 12A", 12B" der Aufnahmeelemente 12A, 12B einen Rand oder Flansch bilden, auf den der Rand des zu befestigenden Helms 3 abgestützt werden kann (siehe die Figuren 6 bis 9). Der durch die Aufnahmeelemente 12A, 12B und das Basisteil 11 gebildete Behälter ist bei der Halterung 1 von Figur 2 durch ein vorzugsweise vorgesehenes stationäres Aufnahmeelement 112 in einen ersten und einen zweiten Speicherbereich S1 bzw. S2 unterteilt. Wie in Figur 1 gezeigt, dient der zweite Speicherbereich S2 der Aufnahme der Flasche 2. Das stationäre Aufnahmeelement 112, das in Figur 2 schematisch gezeigt ist, kann an den weiteren Nutzgegenstand 2, insbesondere die Getränkeflasche unter Berücksichtigung des zur Verfügung stehenden Raumes, der dem Innenraum des befestigten Helms 3 entspricht, beliebig angepasst werden und praktisch eine innere Halterung bilden. Beim Öffnen der beiden Aufnahmeelemente 12A, 12B wird durch das stationäre Aufnahmeelement 112 daher verhindert, dass sich die Getränkeflasche 2 aus der Halterung 1 löst.

Der erste Speicherbereich S1 dient der Aufnahme von Befestigungselementen 4, 41, 42, mittels derer der auf die Halterung 1 aufgesetzte Helm 3 fixierbar ist (siehe Figur 7). In Figur 2 ist ferner das vorzugsweise vorgesehene schalenförmige Fussstück 116 des Basisteils 11 gezeigt, welches den Inhalt des ersten Speicherbereichs S1 bzw. die Befestigungselemente 4, 41, 42 stützt. Beim Öffnen der beiden Aufnahmeelemente 12A, 12B wird durch das schalenförmige Fussstück 116 daher verhindert, dass die Befestigungselemente 4, 41, 42 aus der Halterung 1 fallen können.

In Figur 2 sind ferner die Elemente 13A, 13B des Verschlusses 13 gezeigt, die während des Schliessens der Aufnahmeelemente 12A, 12B ineinander eingreifen. Durch Drücken auf den am Aufnahmeelement 12A vorgesehenen Knopf 13C kann der Verschluss jeweils gelöst und die Flasche 2 entnommen werden.

Figur 3 zeigt die Halterung 1 von Figur 1 mit den Aufnahmeelementen 12A, 12B in Verschlussstellung von der Seite.

Figur 4 zeigt die Halterung 1 von Figur 2 mit den Aufnahmeelementen 12A, 12B in Öffnungsstellung von der Seite.

Figur 5 zeigt die Halterung 1 von Figur 2 von oben. Schematisch mit einer strich-punktierten Linie ist die Position 2' der Flasche 2 eingezeichnet. Ferner sind im Basisteil 11 vorgesehene Montageschlitze 115 gezeigt, durch die Montageschrauben 91 hindurch führbar sind. Weiterhin sind in Figur 5 Kopplungselemente 114, 124A, 124B gezeigt, die der Montage der in Figur 7 gezeigten Befestigungselemente 4, 41 dienen und die als einfache Ösen an das Basisteil 11 (gegebenenfalls an das Fussstück 116 des Basisteils 11) und an die Unterseiten 12A", 12B" der Aufnahmeelemente 12A, 12B angeformt sind. Die Befestigungselemente 4, 41, 42, wie Netz, Riemen, Kette(n), Seil, insbesondere Metallseil, Folie, Tuch oder dergleichen sind daher im Bereich des ersten Speichers S1 montiert und können dort, vorzugsweise innerhalb des schalenförmigen Fussstücks 116, vorteilhaft deponiert werden.

Figur 6 zeigt die Halterung 1 von Figur 2 mit dem aufgesetzten Helm 3, dessen Frontseite am Fussstück 116 des Basisteils 11 sowie an den Unterseiten 12A", 12B" der Aufnahmeelemente 12A, 12B anliegt. Da das Basisteil 11 normalerweise an einem schräg verlaufenden Rahmenteil des Fahrrads derart montiert wird, dass das Fussstück 116 des Basisteils 11 unten liegt, wird der Helm 3 dadurch bereits gehalten, und muss nur noch fixiert werden.

Figur 7 zeigt die Halterung 1 von Figur 2 mit dem aufgesetzten und mittels Befestigungselementen 4, 41, 42 befestigten Helm 3. Die Befestigungselemente 4, 42 bestehen aus einem Netz 4 mit Schnüren, Bändern oder Drähten 41 aus Metall, Textilien oder Kunststoff. Das Netz 4 ist zudem mit einem Verschlusselement 42 verbunden, welches aus einem mit dem Netz 4 verbundenen Montagering 422, einem Griff 423 und einem Bolzen 421 besteht. Der Bolzen 421 ist durch eine Öffnung 1111 im Kopfstück 111 des Basisteils 11 (siehe Figur 6) in eine darin vorgesehene Verschlussvorrichtung 18 einführbar. Vorzugsweise schnappt die Verschlussvorrichtung 18 bei der Einführung des Bolzens 421 automatisch zu und lässt diesen nur wieder frei, wenn die Verschlussvorrichtung 18 beispielsweise mittels des Schlüssels 188 betätigt wird, der in eine am Kopfstück 111 seitlich vorgesehene Öffnung 1112 einführbar ist. Durch die Befestigungselemente 4, 41, 42 kann der Helm 3 daher nicht nur fixiert, sondern auch gegen Diebstahl gesichert werden.

Figur 8 zeigt die mittels Schrauben 91 und Schraubenmuttern 92 an einer Stange 90 montierte Halterung 1 von Figur 7 mit dem befestigten Helm 3 von der Seite. Die symbolisch gezeigte Schraubenmutter 92 ist in die Stange 90 integriert. Stattdessen können auch Hülsen mit einem Innengewinde innerhalb der Stange 90 vorgesehen sein. Die Schraube 91 ist daher frontseitig in der Stange 90 versenkt und tritt dadurch nicht störend in Erscheinung.

Figur 9 zeigt die Halterung 1 von Figur 7 mit dem befestigten Helm 3 von oben. In dieser Ansicht sind die mit dem Netz 4 verbundenen Kopplungselemente 114, 124A, 124B, die vorzugsweise einstückig an das Basisteil 11 und an die Aufnahmeelemente 12A, 12B angeformt sind, gut ersichtlich.

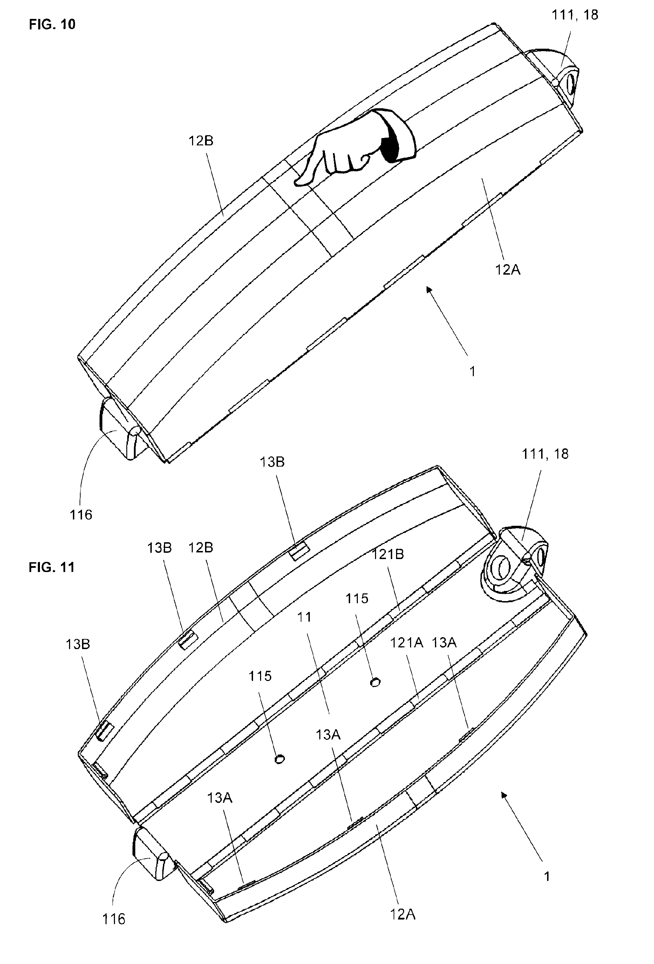

Figur 10 zeigt eine erfindungsgemässe Halterung 1 in einer vorzugsweisen Ausgestaltung mit zwei mittels Gelenken 121A, 121B an einem Basisteil 11 drehbar gelagerten Aufnahmeelementen 12A, 12B, die in der Verschlussstellung gezeigt sind, in der sie zusammen mit dem Basisteil 11 einen dicht abgeschlossene Container bilden. Die beiden zueinander komplementären Aufnahmeelemente 12A, 12B, die in Figur 11 in Öffnungsstellung gezeigt sind, bilden zusammen mit dem Basisteil 11 einen Hohlquader bzw. den Container. Die Aufnahmeelemente 12A, 12B weisen Verschlusselemente 13A bzw. 13B auf, die in der in Figur 10 gezeigten Verschlussstellung ineinander greifen und durch manuellen Druck gelöst werden können. Die beiden drehbaren Aufnahmeelemente 12A, 12B greifen an einander zugewandten Rändern in der Verschlussstellung vorzugsweise derart ineinander ein, dass der Container dicht abgeschlossen ist und die eingelegten Nutzgegenstände gut geschützt sind.

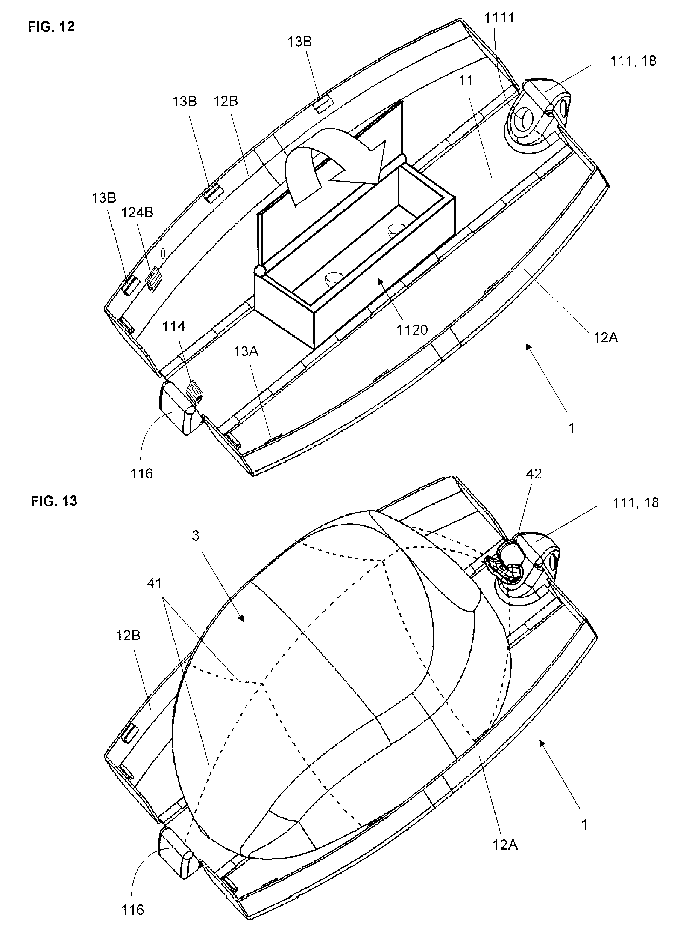

Zur Fixierung von Nutzgegenständen kann die Halterung 1 von Figur 11 mit einem in Figur 12 symbolisch gezeigten, vorzugsweise abschliessbaren stationären Aufnahmeelement 1120 versehen sein, in dem beispielsweise Wertsachen deponiert werden können. Das stationäre Aufnahmeelement 1120, das wiederum an das Basisteil 11 angeformt oder auf dieses aufgesetzt sein kann, ist vorzugsweise an den wenigstens einen zu haltenden Nutzgegenstand angepasst. Ferner sollen die Abmessungen des stationären Aufnahmeelements 1120 nicht grösser sein, als die Innenabmessungen des Helms 3 und der beiden drehbaren Aufnahmeelemente 12A, 12B. Das stationäre Aufnahmeelement 1120 kann daher einen beliebig geformten abschliessbaren Behälter bilden, der gegebenenfalls dieselbe Länge wie die drehbaren Aufnahmeelemente 12A, 12B aufweist.

Figur 13 zeigt die Halterung 1 von Figur 11 mit dem aufgesetzten Helm 3, der innerhalb der Ränder der beiden nach aussen gedrehten Aufnahmeelemente 12A, 12B mittels des Netzes 4 fixiert ist. Das Netz 4 ist auf einer Seite mit Kopplungselementen 114, 124 und auf der anderen Seite mit einem Verschlusselement 42 verbunden, welches einen Bolzen aufweist, der durch eine Öffnung 1111 im Kopfstück 111 des Basisteils 11 in eine darin vorgesehene Verschlussvorrichtung 18 einführbar ist, wie dies bereits in Zusammenhang mit Figur 7 oben beschrieben wurde.

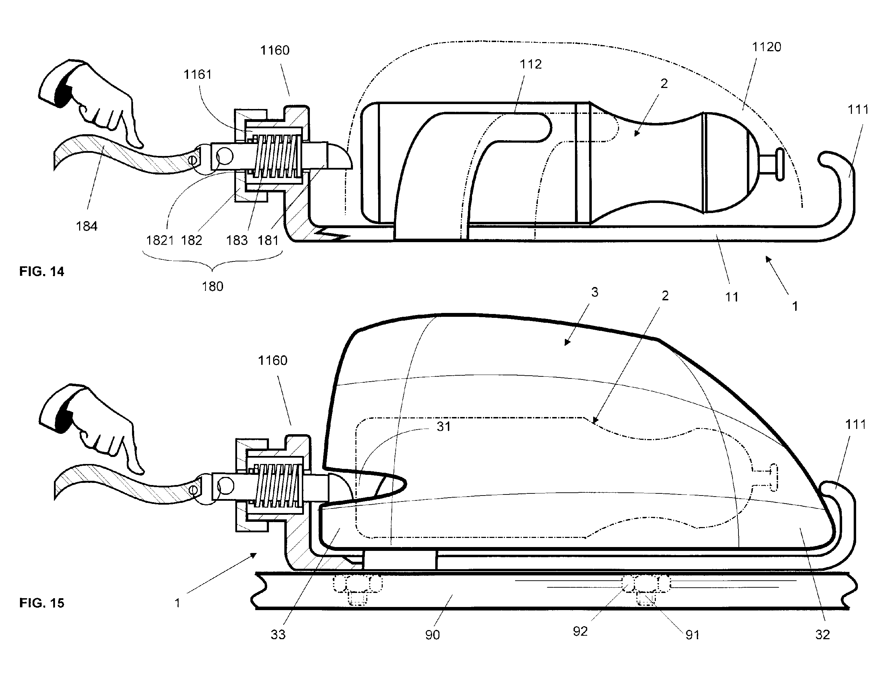

Figur 14 zeigt eine erfindungsgemässe Halterung 1 in einer weiteren vorzugsweisen Ausgestaltung. Diese Halterung 1 weist zwei einstückig mit dem Basisteil 11 verbundene stationäre Aufnahmeelemente 112 auf, mittels derer eine Getränkeflasche 2 gehalten werden kann. Anstelle der gezeigten Aufnahmeelemente 112 kann auch ein stationäres abschliessbares Aufnahmeelement 1120 vorgesehen sein, wie dies mit einer strich-punktierten Linie symbolisch dargestellt ist. Das Aufnahmeelement 112, 1120 kann auf dem Basisteil 11 auch verschiebbar gelagert sein, so dass es an den zu haltenden Nutzgegenstand 2 und an die Innenabmessungen des Helms 3 anpassbar ist (siehe die weitere strich-punktierte Linie).

Das Basisteil 11 weist ein Kopfstück 111 und ein Fussstück 1160 auf, mittels derer, wie in Figur 15 gezeigt, der Helm 3 vorzugsweise formschlüssig gehalten werden kann. Das Kopfstück 111 ist in der Art eines Flansches an die Frontseite des Helmes 3 angepasst. Das Fussstück weist einen Schnappverschluss 180 auf, mit einem Bolzen 181, der beim Aufsetzen des Helms 3 zurück gedrängt wird, und anschliessend in eine im Helm 3 vorgesehene Öffnung 31, beispielsweise in einen Lüftungsschlitz, einrastet.

Der Helm 3 kann daher an das Kopfstück 111 angelegt und gegen das Fussstück 116 gedrückt und somit innerhalb weniger Sekunden mit der Halterung 1 verbunden werden.

Der Bolzen 181 ist durch eine im Fussstück 1160 vorgesehene Kammer 1161 sowie durch eine Öffnung 1821 in einem Deckel 182 hindurch geführt, durch den die Kammer 1161 abschliessbar ist. In der Kammer 1161 ist ferner ein Federelement 183 vorgesehen, welches den Bolzen 181 nach vorne drückt. Um den Helm 3 wieder zu lösen, wird der Bolzen 181 mittels der damit verbundenen Leine 184 zurückgezogen.

Wie in Figur 15 gezeigt, können der Helm 3 und die Flasche 2 nicht nur alternativ, sondern auch gleichzeitig mit der erfindungsgemässen Halterung 1 verbunden sein, was verschiedene weitere Vorteile mit sich bringt.

Ferner kann auch bei dieser Ausgestaltung der Halterung 1 ein mit einem Schlüssel betätigbarer Verschluss 180 verwendet werden, welcher den Helm 3 und den gegebenenfalls darin gehaltenen Nutzgegenstand 2 gegen Diebstahl schützt.

## Patentansprüche

1. Halterung (1) für ein Fahrrad mit einem Basisteil (11), das anhand von Montageelementen (115, 91, 92) mit einem Strukturelement (90) des Fahrrads, insbesondere einem Teil des Fahrradrahmens, verbindbar ist, und das mit Befestigungselementen (4;1160; 111) zur Befestigung eines Helms (3) versehen ist, **dadurch gekennzeichnet, dass** das vorzugsweise stab- oder plattenförmige Basisteil (11) mit wenigstens einem Aufnahmeelement (12A, 12B; 112; 1120) versehen ist, das der Lagerung wenigstens eines weiteren Nutzgegenstandes (2), insbesondere einer Flasche, dient, so dass der Helm (3) und der weitere Nutzgegenstand (2) gleichzeitig oder alternativ mit der Halterung (1) verbunden sein können.

2. Halterung (1) nach Anspruch 1, **dadurch gekennzeichnet, dass** der Helm (3) derart befestigbar ist, dass dessen Innenseite dem Basisteil (11) zugewandt ist und/oder dass dessen front- und rückseitige Randabschlüsse (32, 33) auf dem Basisteil (11) aufliegen.

3. Halterung (1) nach Anspruch 1 oder 2, **dadurch gekennzeichnet,**
a) **dass** das wenigstens eine stationäre Aufnahmeelement (112; 1120), verschiebbar gelagert oder einstückig, vorzugsweise derart mit dem Basisteil (11) verbunden ist, dass es in den Innenraum des befestigten Helms (3) hineinragt; und/oder
b) **dass** ein erstes und ein zweites Aufnahmeelement (12A, 12B) vorgesehen sind, die je mittels wenigstens eines Gelenks (121A, 122A; 121B, 122B) mit dem Basisteil (11) verbunden und derart drehbar sind, dass in einer Verschlussstellung der wenigstens eine weitere Nutzgegenstand (2) durch die beiden Aufnahmeelemente (12A, 12B) und in einer Öffnungsstellung der Helm (3) gehalten werden kann.

4. Halterung (1) nach Anspruch 3, **dadurch gekennzeichnet,**
a) **dass** das stationäre Aufnahmeelement (112) eine dem Halten des Nutzgegenstandes (2), insbesondere der Flasche, dienende ein- oder mehrteilige Klammer bildet; oder
b) **dass** das stationäre Aufnahmeelement (1120) eine der Aufnahme des wenigstens einen Nutzgegenstandes (2) dienende, vorzugsweise abschliessbare Box bildet.

5. Halterung (1) nach Anspruch 3 oder 4, **dadurch gekennzeichnet,**
a) **dass** das erste und das zweite drehbare Aufnahmeelement (12A, 12B) in der Verschlussstellung einen Behälter bilden, in den der Nutzgegenstand (2) einsetzbar und wieder entnehmbar ist; oder
b) **dass** das erste und das zweite drehbare Aufnahmeelement (12A, 12B) in der Verschlussstellung einen vorzugsweise wasserdicht abgeschlossenen Container bilden, welcher der Aufnahme des wenigstens einen Nutzgegenstandes (2) dient; und/oder
c) **dass** das erste und das zweite drehbare Aufnahmeelement (12A, 12B) derart dimensioniert sind, dass der Rand des Helms (3) in der Öffnungsstellung durch die Ränder der schalenförmigen Aufnahmeelemente (12A, 12B) zumindest teilweise umfasst wird.

6. Halterung (1) nach Anspruch 5, **dadurch gekennzeichnet, dass** das erste und das zweite drehbare Aufnahmeelement (12A, 12B) mittels eines Verschlusses (13), vorzugsweise mittels eines Schnapp-Verschlusses, in der Verschlussstellung arretierbar sind.

7. Halterung (1) nach Anspruch 5 oder 6, **dadurch gekennzeichnet, dass** Basisteil (11) ein Kopfstück (111) und ein Fussstück (116, 1160) aufweist, die den Helm (3), nach dessen Befestigung, frontseitig und rückseitig überragen und dass das Fussstück (116, 1160) und das wenigstens eine stationäre Aufnahmeelement (12A, 12B; 112; 1120) einen Raum (S) begrenzen, welcher der Aufnahme der Befestigungselemente (4, 41, 42), wie einem Netz (4), wenigstens einem Riemen, wenigstens einem Seil, insbesondere Metallseil, oder wenigstens einer Metallkette (41), dient.

8. Halterung (1) nach einem der Ansprüche 1-7, **dadurch gekennzeichnet, dass** Basisteil (11) ein Kopfstück (111) und ein Fussstück (116, 1160) aufweist, die den Helm (3), nach dessen Befestigung, frontseitig und rückseitig überragen und
a) dass das Kopfstück (111) und das Fussstück (116, 1160) mit Kopplungselementen (18; 1162) versehen sind, die der Fixierung des Helms (3) dienen, oder
b) dass das Kopfstück (111) einerseits und das Fussstück (116, 1160) und/oder die Aufnahmeelemente (12A, 12B) andererseits mit Kopplungselementen (18; 124A, 114, 1162) versehen sind, die mit den Befestigungselementen (4, 41, 42) verbunden oder verbindbar sind.

9. Halterung (1) nach Anspruch 8, **dadurch gekennzeichnet,**
a) **dass** das Kopfstück (111) oder das Fussstück (1160) eine vorzugsweise mittels eines Schlüssels (188) abschliessbare Verschlussvorrichtung (180) mit einem Kupplungsstück (181) aufweist, das formschlüssig mit dem Helm (3) zusammenwirkt, gegebenenfalls in eine Öffnung (31), insbesondere einen Lüftungsschlitz des befestigten Helms (3) eingreift, oder
b) **dass** das Kopfstück (111) oder das Fussstück (1160) mit einer vorzugsweise mittels eines Schlüssels (188) betätigbare Verschlussvorrichtung (18) versehen ist, welche der Aufnahme eines Verschlusselementes (42) dient, das mit den Befestigungselementen (4, 41) verbunden ist.

10. Halterung (1) nach einem der Ansprüche 1-10, **dadurch gekennzeichnet, dass** das Basisteil (11) und die Aufnahmeelemente (12A, 12B; 112; 1120) aus Kunststoff gefertigt sind.

11. Halterung (1) nach einem der Ansprüche 1-10, **dadurch gekennzeichnet, dass** das Basisteil (11) wenigstens eine Montageöffnung (115) aufweist, durch die eine Montageschraube (91) hindurch führbar ist und/oder dass das Basisteil (11) vorzugsweise einstückig mit Flanschen oder Klammern versehen ist, die mit dem für die Montage vorgesehenen Strukturelement des Fahrrads zusammenwirken.

12. Halterung (1) nach einem der Ansprüche 1-11, **dadurch gekennzeichnet, dass** eine Flasche (2) vorgesehen ist, die vorzugsweise an den Innenraum handelsüblicher Helme angepasst ist.
